(19) Europäisches Patentamt
European Patent Office
Office européen des brevets

(11) **EP 3 542 262 B1**

(12) **EUROPÄISCHE PATENTSCHRIFT**

(45) Veröffentlichungstag und Bekanntmachung des Hinweises auf die Patenterteilung:
**06.01.2021 Patentblatt 2021/01**

(21) Anmeldenummer: **17800702.7**

(22) Anmeldetag: **15.11.2017**

(51) Int Cl.:
*G06F 7/72* (2006.01)          *H04L 9/00* (2006.01)
*H04L 9/30* (2006.01)

(86) Internationale Anmeldenummer:
**PCT/EP2017/001338**

(87) Internationale Veröffentlichungsnummer:
**WO 2018/091139 (24.05.2018 Gazette 2018/21)**

(54) **PUNKTMULTIPLIKATION AUF EINER ERWEITERUNG EINER ELLIPTISCHEN KURVE**

POINT MULTIPLICATION ON AN EXTENSION OF AN ELLIPTIC CURVE

MULTIPLICATION DE POINTS SUR UN ÉLARGISSEMENT D'UNE COURBE ELLIPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2016 DE 102016013692**

(43) Veröffentlichungstag der Anmeldung:
**25.09.2019 Patentblatt 2019/39**

(73) Patentinhaber: **Giesecke+Devrient Mobile Security GmbH**
**81677 München (DE)**

(72) Erfinder: **SEYSEN, Martin**
**80809 München (DE)**

(56) Entgegenhaltungen:
**EP-A1- 2 228 716     DE-A1- 10 122 504**

- JOHANNES BLÄMER ET AL: "Sign Change Fault Attacks On Elliptic Curve Cryptosystems", INTERNATIONAL ASSOCIATION FOR CRYPTOLOGIC RESEARCH,, Bd. 20040911:142003, 11. September 2004 (2004-09-11), Seiten 1-21, XP061000949, [gefunden am 2004-09-11] in der Anmeldung erwähnt
- PABLO RAUZY ET AL: "Using Modular Extension to Provably Protect ECC Against Fault Attacks", INTERNATIONAL ASSOCIATION FOR CRYPTOLOGIC RESEARCH,, Bd. 20151013:102435, 3. Oktober 2015 (2015-10-03), Seiten 1-37, XP061019275, [gefunden am 2015-10-03] in der Anmeldung erwähnt

**Beschreibung**

Gebiet der Erfindung

Die Erfindung betrifft ein Verfahren zur Durchführung einer kryptographischen Berechnung, umfassend eine Punktmultiplikation auf einer elliptischen Kurve, genauer die Berechnung des k-fachen Vielfachen $Q = k*P$ eines Ausgangspunktes P von ungerader Ordnung auf einer elliptischen Kurve E, wobei die Berechnung auf einer Erweiterung der elliptischen Kurve durchgeführt wird statt auf der Kurve selbst.

Stand der Technik

Unter kryptographischen Berechnungen zur Verschlüsselung, Entschlüsselung, Signaturbildung und Signaturprüfung sind Verfahren der elliptische Kurven Kryptographie, kurz ECC, bekannt, in die ein berechneter Punkt auf einer elliptischen Kurve eingeht. Bekannte Vertreter solcher Verfahren sind Elliptische Kurven Diffie Hellman Verfahren zur kombinierten Authentisierung und Schlüsselableitung zwischen zwei Parteien, um einen gesicherten Kommunikationskanal zwischen den Parteien einzurichten.

Differential-Fault-Analysis (DFA) Angriffe auf kryptographische Berechnungen erlauben ein Ausspähen geheimer Daten, die in der kryptographischen Berechnung verarbeitet werden. Daher werden kryptographische Berechnungen in allen hochwertigeren Produkten als abgesicherte kryptographische Berechnungen implementiert. In abgesicherten kryptographischen Berechnungen besteht eine standardmäßig vorgesehene technische Maßnahme darin, DFA-Abwehrmaßnahmen in die kryptographische Berechnung zu implementieren. Eine standardmäßige DFA-Abwehrmaßnahme besteht darin, eine Überprüfung des Ergebnisses der kryptographischen Berechnung durch Durchführen zusätzlicher Berechnung durchzuführen. Zur Erzeugung des Ergebnisses der kryptographischen Berechnung sind diese zusätzlichen Berechnungen nicht erforderlich. Nachfolgend wird ein aus dem Stand der Technik [2][Blömer] bekanntes Beispiel für eine mögliche Art der Überprüfung aus dem Bereich der Elliptische Kurven Kryptographie genauer beschrieben.

Die Punkte einer beliebigen elliptischen Kurve über einem endlichen Körper bilden eine endliche Gruppe bezüglich einer 'Punktaddition' genannten Operation. Die Ordnung dieser Gruppe wird auch die Ordnung der Kurve genannt. Die Ordnung eines Punktes auf der Kurve ist die Ordnung der von diesem Punkt erzeugten Untergruppe dieser Gruppe, also derjenigen Gruppe, die aus den Vielfachen dieses Punktes besteht. Für die Kryptographie sind hauptsächlich die von Punkten von Primzahlordnung erzeugen Gruppen von Bedeutung.

Das Dokument [2] [Blömer] aus dem Stand der Technik offenbart ein Verfahren zur Punktmultiplikation, genauer zur Berechnung des k-fachen Vielfachen $Q = k*P$ eines Ausgangspunktes P von ungerader Ordnung auf einer elliptischen Kurve E, gemäß dem Oberbegriff von Anspruch 1.

Genauer wird in [2] anstelle des Vielfachen $Q = k*P$ auf der Kurve E das Vielfache $Q_1 = k*P_1$ auf einer Kurve $E_1$ berechnet. $E_1$ stellt eine modulare Erweiterung der Kurve E durch eine kleinere Hilfskurve $E_2$ dar, die kleiner ist als die Kurve E. $P_1$ ist eine modulare Erweiterung des Ausgangspunktes P auf der Kurve $E_1$. Das Ergebnis Q wird durch modulare Reduktion des Punktes $Q_1$ von der Kurve $E_1$ auf die Kurve E ermittelt. Zur Überprüfung der Berechnung von $Q_1$ wird das Vielfache $Q_2 = k*P_1$ auf der Hilfskurve $E_2$ berechnet. Das Ergebnis Q wird nur dann ausgegeben, wenn das Ergebnis Q* der modularen Reduktion des Punktes $Q_1$ von auf der Kurve $E_1$ auf die Kurve $E_2$ gleich dem zur Überprüfung berechneten Wert $Q_2$ ist.

Der Sinn, das Ergebnis Q der Punktmultiplikation statt auf der Kurve E selbst auf einer Erweiterung $E_1$ derselben zu berechnen, und diese Berechnung vor der Ausgabe des Ergebnisses zu überprüfen, besteht darin, Fehlerangriffe auf die Punktmultiplikation abzuwehren. Ohne diese Überprüfung könnte ein Angreifer durch einen Fehlerangriff z.B. mit Hilfe von *Differential Fault Analysis* [DFA] eventuell ein fehlerhaftes Ergebnis der Punktmultiplikation erhalten. Ein derart fehlerhaftes Ergebnis kann eine Information über den in der Regel geheimen Multiplikator k beinhalten, was die Sicherheit der Punktmultiplikation gefährdet. Ein in [2] beschriebener Fehlerangriff zielt darauf ab, das Vorzeichen eines Zwischenergebnisses bei der Punktmultiplikation umzukehren und immer noch einen Punkt auf der elliptischen Kurve E zu erzielen. Bei Berechnung auf der Kurve E selbst kann der Fehlerangriff gelingen, bei Berechnung auf der Erweiterung der Kurve $E_1$ hingegen nicht. Die Überprüfungs-Berechnung auf der Hilfskurve $E_2$ (kleine Kurve $E_2$), die zur Erweiterung der Kurve E auf die erweiterte Kurve $E_1$ verwendet wurde, und der anschließende Vergleich zwischen den Berechnungsergebnissen auf $E_1$ und auf $E_2$ (modulo $E_2$) dienen dazu, derartige Fehler bei der Berechnung auf $E_1$ mit hoher Wahrscheinlichkeit zu erkennen und die Ausgabe eines fehlerhaften Ergebnisses zu verhindern.

Die Standard-Formeln für die Punktaddition und die Punktverdopplung bei elliptischen Kurven in Weierstraß-Form sehen Fallunterscheidungen vor. Wenn einer der beiden Summanden oder deren Summe der unendlich ferne Punkt ist (oder wenn bei der Addition beide Summanden gleich sind), gilt eine andere Formel als im Standard-Fall. Aus Effizienzgründen und zur Erschwerung von Seitenkanalangriffen werden diese Sonderfälle bei praktischen Implementierungen genauso behandelt wie der Standardfall. Bei geeigneter Durchführung der Berechnung entspricht das Endergebnis immer dann dem unendlich fernen Punkt, wenn ein Sonderfall fälschlich genauso wie ein Standardfall abgearbeitet worden ist. Somit sind diese bei einer praxisrelevanten Kurve E sehr selten auftretenden Fehler leicht erkennbar.

Problematisch an der Lösung des Berechnens des Punkts Q auf der erweiterten Kurve $E_1$ ist, dass bei der Überprüfungs-Berechnung auf der Hilfskurve $E_2$ mit nicht-vernachlässigbarer Wahrscheinlichkeit der Punkt im Unendlichen (oder gleichbedeutend: der unendliche ferne Punkt) als Zwischenergebnis auftreten kann. Tritt bei der Berechnung auf $E_1$ oder der Überprüfungs-Berechnung auf $E_2$ der unendlich ferne Punkt von $E_2$ als Zwischenergebnis auf (wobei ein Zwischenergebnis der Berechnung auf $E_1$ vorher modulo $E_2$ zu reduzieren ist), so sind die Endergebnisse modulo $E_2$ auch bei fehlerfreier Berechnung möglicherweise verschieden, oder der Vergleich der Endergebnisse ist von geringer Aussagekraft. Diese Problematik wird in [3] detailliert erörtert.

## Zusammenfassung der Erfindung

Der Erfindung liegt die Aufgabe zu Grunde, ein verbessertes gegen Fehlerangriffe gesichertes Verfahren zum zumindest teilweisen Durchführen einer kryptographischen Berechnung zu schaffen, das möglichst zuverlässig stets ein verifiziert richtiges Ergebnis liefert.

Der Erfindung liegt genauer die Aufgabe zu Grunde, in einem solchen Verfahren ein Verfahren zur Berechnung eines Punkts auf einer elliptischen Kurve zu schaffen, bei dem die Berechnung auf einer Erweiterung der elliptischen Kurve durchgeführt wird statt auf der Kurve selbst, und zur Überprüfung des berechneten Punkt eine Überprüfungs-Berechnung auf der Hilfskurve durchgeführt wird, mit der die Kurve erweitert wurde, und bei welchem Verfahren die Überprüfungs-Berechnung zuverlässig ein aussagekräftiges Ergebnis liefert, anhand dessen sich der berechnete Punkt auf Richtigkeit überprüfen lässt.

Die Aufgabe wird gelöst durch ein Verfahren nach Anspruch 1. Vorteilhafte Ausgestaltungen der Erfindung sind in den abhängigen Ansprüchen angegeben.

Vom Grundsatz her wird zur Berechnung der Punktmultiplikation ein Verfahren vom Typus "Double and Add/Subtract" auf einer erweiterten Kurve eingesetzt, bei dem die Multiplikation als eine Abfolge von Verdopplungen und Additionen bzw. Subtraktionen dargestellt wird. Weiter wird die Berechnung auf einer erweiterten Kurve $E_1$, die durch Erweiterung der Kurve E um eine Hilfskurve $E_2$ gebildet ist, ausgeführt und das Ergebnis von der erweiterten Kurve $E_1$ auf die Kurve E reduziert. Als eine Überprüfungs-Berechnung wird zudem das auf der erweiterten Kurve $E_1$ berechnete Vielfache auf der Hilfskurve $E_2$ modular reduziert und mit einem direkt auf der Hilfskurve $E_2$ berechneten Punkt $P_2$ auf Gleichheit verglichen.

Das Verfahren nach Anspruch 1 zeichnet sich dadurch aus, dass die Ordnung der Hilfskurve $E_2$, ebenso wie die Ordnung des modulo der Hilfskurve $E_2$ reduzierten Ausganspunktes $P_1$, durch eine derart hinreichend hohe Zweierpotenz teilbar ist, dass bei der Berechnung des Vielfachen $Q_1$ von $P_1$ modulo der Hilfskurve $E_2$ niemals der unendlich ferne Punkt von $E_2$ als Zwischenergebnis auftritt.

Bei der Berechnung des Vielfachen $Q_1 = k*P_1$ auf der Kurve $E_1$ werden Punkt-Additionen und/oder -Subtraktionen eingesetzt. Ohne die erfindungswesentlichen Merkmale können Angriffe, die Punktadditionen in Punktsubtraktionen verfälschen (oder umgekehrt) immer dann nicht bemerkt werden, wenn bei einer der Berechnungen auf den Kurven $E_1$ oder Hilfskurve $E_2$ der unendlich ferne Punkt von $E_2$ als Zwischenergebnis (modulo $E_2$) auftritt. In diesem Fall ist das Ergebnis des Vergleiches bei richtiger Berechnung möglicherweise fehlerhaft, oder bei durch DFA verfälschter Berechnung nicht aussagekräftig.

Gemäß dem Stand der Technik wird die Punktmultiplikation $Q_1 = k * P_1$ auf eine Folge von Punktverdoppelungen und Punktadditionen oder Punktsubtraktionen zurückgeführt. Erfindungsgemäß wird bei jeder Punktaddition oder -subtraktion sichergestellt, dass einer der Operanden ein gerades und der andere Operand ein ungerades Vielfaches des Ausgangspunktes $P_1$ ist. Somit ist das Ergebnis dieser Operation stets ein ungeradzahliges Vielfaches von $P_1$. Da der Punkt $P_1$ modulo der Kurve $E_2$ von geradzahliger Ordnung ist, kann das Ergebnis einer erfindungsgemäß ausgeführten Punktaddition oder -subtraktion modulo der Hilfskurve $E_2$ niemals der unendlich ferne Punkt auf $E_2$ sein. Außerdem ist sichergestellt, dass die beiden Summanden einer Punktaddition modulo $E_2$ niemals gleich sind, so dass zumindest modulo der Hilfskurve $E_2$ keiner der oben genannten Sonderfälle bei der Punktaddition auf Weierstraß-Kurven jemals auftritt.

Erfindungsgemäß hat der der Punkt $P_1$ modulo der Hilfskurve $E_2$ eine durch $2^{\{e+1\}}$ teilbare Ordnung, für eine geeignete natürliche Zahl e. Bei einer Punktmultiplikation treten erfindungsgemäß nur Folgen von höchstens e direkt hintereinander ausgeführten Punktverdoppelungen eines Zwischenergebnisses $Q_1^{\{(j)\}}$ auf, wobei jeder Ausganspunkt $Q_1^{\{(j)\}}$ einer derartigen Folge von Verdoppelungen ein ungerades Vielfaches von $P_1$ ist. Somit ist jedes Ergebnis einer Punktverdoppelung ein x-faches Vielfaches von $P_1$, wobei x höchstens durch $2^e$, aber nicht durch $2^{\{e+1\}}$ teilbar ist. Somit kann auch das Ergebnis einer Punktverdoppelung modulo $E_2$ niemals der unendlich ferne Punkt auf $E_2$ sein.

Folglich sind alle Zwischenergebnis bei der Punktmultiplikation korrekt modulo $E_2$, auch wenn man die Sonderfälle bei den Formeln für die Punktaddition und -verdoppelung auf Weierstraß-Kurven ignoriert.

Daher ist gemäß Anspruch 1 ein Verfahren geschaffen, bei dem die Überprüfungs-Berechnung zuverlässig ein aussagekräftiges Ergebnis liefert, anhand dessen sich der berechnete Punkt Q auf Richtigkeit überprüfen lässt.

Folglich werden Abbrüche des kryptographischen Verfahrens, die auf Auftreten des Punkts im Unendlichen beruhen, vermieden. Somit können die Vorteile des Angriffsschutzes durch Rechnen auf der erweiterten Kurve genossen werden und gleichzeitig die herkömmlicherweise damit einhergehenden Nachteile vermieden werden. Das Verfahren liefert zuverlässig stets ein verwertbares Ergebnis.

Nachfolgend werden bevorzugte Ausführungsformen dargelegt.

Die (Haupt-) Kurve E ist wahlweise eine Kurve von Primzahlcharakteristik p. Die (Hilfs-)Kurve $E_2$ ist wahlweise eine Kurve von Primzahlcharakteristik p'. Dabei werden wahlweise die obenstehend angeführten arithmetischen Operationen, insbesondere Verdopplung, Addition bzw. Subtraktion, auf der Erweiterungskurve $E_1$ modulo p * p' ausgeführt.

Wahlweise sind die Kurven E und E2 Kurven über einem endlichen Körper $GF(p^n)$ bzw. $GF(p^m)$ mit $p^n$ bzw. $p^m$ Elementen, wobei die endlichen Körper $GF(p^n)$ bzw. $GF(p^m)$ als Polynomringe GF(p)[x]/Pn bzw. GF(p)[x]/Pm dargestellt werden, für geeignete Polynome $P_n$ und $P_m$ vom Grad n bzw. m, und wobei die arithmetischen Operationen auf der Erweiterungskurve $E_1$ in dem Ring $GF(p) [x]/ (P_n*P_m)$ ausgeführt werden. Hierbei gilt wahlweise p = 2 für die Charakteristik p des Körpers GF.

Wahlweise ist die durchlaufene Folge von Punktverdoppelungen auf der einen Seite und von Punktadditionen oder -subtraktionen auf der anderen Seite unabhängig von dem Multiplikator k.

Wahlweise wird der Punkt $P_2$, der durch Reduktion des Punktes $P_1$ modulo der Hilfskurve $E_2$ gegeben ist, fest gewählt. Alternativ wird als der Punkt $P_2$, der durch Reduktion des Punktes $P_1$ modulo der Hilfskurve $E_2$ gegeben ist, ein zufällig gewähltes ungerades Vielfaches eines fest gewählten Punktes auf der Hilfskurve $E_2$ verwendet.

Wahlweise ist die Ordnung q des Ausgangspunktes P eine Primzahl.

Gemäß einer Variante des Verfahrens (Anspruch 8), die einen modifizierten Multiplikator einsetzt, wird vor Beginn der Berechnung zu dem Multiplikator k ein kleines Vielfaches der l*q Gruppenordnung q addiert, so dass k'= k+l*q ungerade ist, und dass bei der Punktmultiplikation der Multiplikator k' anstelle von k verwendet wird.

Bei dieser Variante des Verfahrens (Anspruch 10) mit modifiziertem Multiplikator wird der ungerade Multiplikator k' weiter wahlweise in der Form $k' = \sum_{\{j=0\}}^{\{i-1\}} 2^{\{ej\}} k_j$ dargestellt, so dass alle $k_j$ ungerade und dem Betrag nach kleiner als $2^e$ sind, und dass $Q_1 = k' * P_1$ wie folgt berechnet wird:

$$Q_1^{\{(i-1)\}} = k_{\{i-1\}} P_1,$$

$$Q_1^{\{(j-1)\}} = 2^e * Q_1^{\{(j)\}} + k_{\{j-1\}} P_1, \text{ für } j = i-1,...,1,$$

$$Q_1 = Q_1^{\{(0)\}}.$$

Bei einer Spezialform der Variante des Verfahrens mit modifiziertem Multiplikator hat weiter wahlweise der Punkt $P_2$, der durch Reduktion des Punktes $P_1$ modulo der Hilfskurve $E_2$ gegeben ist, die Ordnung $2^{\{e+1\}}*q$, wobei jedes Zwischenergebnis bei der Berechnung von $Q_1$ modulo der Hilfskurve $E_2$ ein x-faches Vielfache von $P_1$ ist, so dass x höchstens durch $2^e$, aber nicht durch $2^{\{e+1\}}$ teilbar ist. Letzteres ist z.B. bei der Variante des Verfahrens nach Anspruch 10 der Fall.

Bei der vorstehend angeführten Spezialform ist wahlweise weiter q ungerade, wobei keine Beziehung $2^l * b = +-a$ modulo q gilt, für ungerade a, b mit $0 < a, b < 2^e$, und wobei l > 0 und ungefähr gleich der Bitlänge der größten von dem Verfahren unterstützten Kurve E ist. Durch diese spezielle Maßnahme bzw. Parametrisierung können durch bis zu zwei term-fault errors detektiert werden (term-fault errors sind Fehler, bei denen ein bestimmter Punkt aus einer im Voraus berechneten Tabelle von kleinen Vielfachen von P addiert oder subtrahiert werden soll, und wobei faktisch aber ein anderer Punkt aus der Tabelle addiert oder subtrahiert wird, oder wobei möglicherweise eine Subtraktion anstelle einer Addition durchgeführt wird, oder umgekehrt.) Dieser Sachverhalt ist bislang für die praxisrelevanten Fälle durchgerechnet worden.

Wahlweise wird durch das Merkmal, dass die Ordnung des Ausgangspunktes P eine Primzahl ist, bei Verwendung eines geeigneten Multiplikators k' = k+l*q erreicht, dass niemals der unendlich ferne Punkt auf der Kurve E als Zwischenergebnis auftritt.

Wahlweise sind die Kurven E und $E_2$ in Weierstraß-Form dargestellt.

## Kurze Beschreibung der Zeichnungen

Im Folgenden wird die Erfindung an Hand von Ausführungsbeispielen und unter Bezugnahme auf die Zeichnungen näher erläutert, in der zeigen:

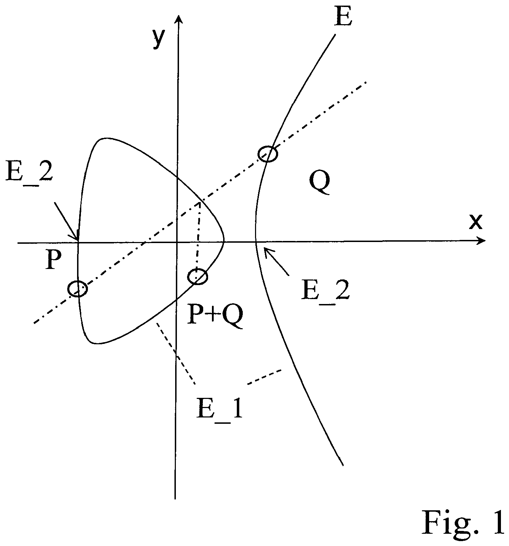

Fig. 1 eine schematische Darstellung elliptischer Kurven zur Veranschaulichung der Erfindung.

## Detaillierte Beschreibung von Ausführungsbeispielen

Fig. 1 zeigt, in schematischer und lediglich symbolhafter Darstellung, eine elliptische Kurve K (rechter länglicher Kurventeil), eine kleine Hilfskurve $E_2$ (die beiden mit Pfeilen bezeichneten Schnittpunkte mit der x-Achse) und eine erweiterte Kurve oder Erweiterung $E_1$ (der linke geschlossene Kurventeil und der rechte längliche Kurventeil zusammen), oder gleichbedeutend erweiterte Kurve $E_1$, die durch Erweiterung der Kurve E um die kleine Hilfskurve $E_2$ erzeugt ist. Ziel der Punktmultiplikation im erfindungsgemäßen Verfahren ist die Berechnung eines Punkts Q = k*P auf der Kurve E, als ein k-faches Vielfaches eines ursprünglichen Punkts P, der ebenfalls auf der Kurve E liegt.

Der Punkt Q wird nicht direkt auf der Kurve E berechnet, sondern durch Berechnung eines Punkts $Q_1$ auf der Erweiterungs-Kurve $E_1$ und modulare Reduktion von $Q_1$ zurück auf die Kurve E, um Q zu erzeugen. Außerdem wird das Ergebnis Q* der modularen Reduktion von $Q_1$ auf die Hilfskurve $E_2$ berechnet. Zur Überprüfung, ob ein DFA-Angriff stattgefunden hat, wird auf der Hilfskurve $E_2$ der Punkt $Q_2$ berechnet und mit Q* verglichen ($Q_2$ =? Q*). Ist $Q_2$ = Q* (+), so wird als Ergebnis der Punkt Q ausgegeben. Andernfalls wird von einem DFA-Angriff ausgegangen.

Erfindungsgemäß wird die Ordnung der Hilfskurve $E_2$ teilbar ("div") durch eine hinreichend hohe Zweierpotenz gewählt. Hierdurch wird sichergestellt, dass weder $Q_2$ noch irgendein Zwischenergebnis bei der Berechnung von $Q_2$ der Punkt im Unendlichen ist.

Eine Punktmultiplikation auf einer elliptischen Kurve E, die einen Punkt P auf einen Punkt Q abbildet, wird vom Grundsatz her durch einen Algorithmus verwirklicht, der durch eine Abfolge von Punktverdopplungen 2*Q und Punktadditionen Q+P gebildet ist.

# Algorithmus 1: Abfolge von Q = 2* Q, Q = Q+P

Nachfolgend wir ein Algorithmus für eine ausgewogene (balancierte) binäre Punktmultiplikation auf einer Kurve E dargelegt.

Eingabe (Input):

Punkt P auf Kurve E, Fenstergröße e, ungerade ganze Zahl k, mit k = Summe (von j=0 bis j=i-1) ($k_j$*2$^{je}$), wobei $k_j$ ungerade und -2$^e$ < $k_j$ <2$^e$ ist.

Ausgabe (Output):

$$Q = kP$$

Algorithmus 2 für balancierte binäre Punktmultiplikation:

[1] setze T[j] = j*P für alle ungeraden j mit -2$^e$ < kj <2$^e$
[2] setze Q = T[$k_{(i-1)}$]
[3] für j von 1-2 herunter bis 0, führe aus:
[4] Q = 2$^e$ * Q // durch wiederholte Verdopplung getan
[5] Q = Q + T[$k_j$]
[6] Ausgabe Q.

Mit einem Vorzeichen-Fehlerangriff wie dem im Dokument [2] aus dem Stand der Technik offenbarten ist es möglich, in einen Algorithmus wie dem oben dargelegten in Schritt [5] die Addition + T[$k_j$] durch eine Subtraktion - T[$k_j$] zu ersetzen und dadurch eine verfälschte Ausgabe Q zu erzeugen. Bei einer Variante von Algorithmus 2 werden in Schritt [1] nur die Vielfachen für positive j gespeichert, und ein Vielfaches für ein negatives j wird nur bei Bedarf durch Punktnegation des Vielfachen für |j| berechnet.

Nachfolgend wird ein Algorithmus für eine fehlerfreie Punktmultiplikation Q=kP mit modularer Erweiterung (englisch: modular extension) dargelegt, gemäß einer Ausführungsform der Erfindung. Ausgegangen wird von einem Punkt P von Primzahlordnung q auf einer (Haupt-)Kurve E über dem Körper von Primzahlordnung p. Als Erweiterung wird ein Punkt $P_2$ der Ordnung $2^{(e+1)} * q'$ auf einer kleinen Hilfskurve $E_2$ benutzt über dem Körper von Primzahlordnung $p' < p$ benutzt.

Eingabe (Input):

Punkt P der Ordnung q, q eine Primzahl, auf einer Kurve E. Fenster mit Größe e > 1, Multiplikator k mit 0 < k < q; Punkt P_2 der Ordnung $2^{(e+1)} * q'$ auf einer kleinen Hilfskurve.

Ausgabe (Output):

$$Q = kP.$$

Algorithmus 3:
zur fehlerfreien Punktmultiplikation mit modularer Erweiterung:

[1] Setze k' = k + λq, mit $-2 \leq \lambda \leq 1$, k' ungerade, so dass Algorithmus 2 fehlerfrei rechnet.
[2] Sei $E_1$ die Kurve, die man erhält, wenn E und $E_2$ gemäß dem Chinesischen Restsatz kombiniert werden.
[3] Sei $P_1$ der Punkt auf $E_1$, den man erhält, wenn P und $P_2$ gemäß dem Chinesischen Restsatz kombiniert werden.
[4] Berechne $Q_1 = k' \cdot P_1$ auf der Kurve $E_1$, durch Anwenden von Algorithmus 2.
[5] Berechne $Q_2 = k' \cdot P2$ auf der Kurve $E_2$, durch Anwenden von Algorithmus 2.
[6] Falls $Q_1 = Q_2$ (mod p'),
dann Ausgabe Q:= $Q_1$ mod p
andernfalls Ausgabe "Fehlerangriff detektiert!"

Algorithmus 3 berechnet das Ergebnis kP in allen Fällen fehlerfrei. Um dies zu beweisen, genügt es zu zeigen, dass der Algorithmus 3 das Ergebnis k' $P_1$ in Schritt [4] sowohl modulo der Hauptkurve E als auch modulo der Hilfskurve $E_2$ korrekt berechnet. Um zu zeigen, dass das Ergebnis k' $P_1$ modulo der Hauptkurve E korrekt berechnet wird, genügt es zu zeigen, dass man in Schritt [1] einen Wert λ bestimmen kann, so dass k' = k + λq ungerade ist, und dass bei der Berechnung von k' P in dem Algorithmus 2 niemals der unendlich ferne Punkt auf E als Zwischenergebnis auftritt. Ein geeigneter Wert λ kann bestimmt werden, wie sich mathematisch beweisen lässt. Der Beweis wird hier nicht im Detail ausgeführt.
Aus folgender Überlegung berechnet Algorithmus 3 den Punkt k' $P_1$ modulo der Kurve $E_2$ korrekt, wobei $P_1 = P_2$ modulo der Kurve $E_2$ gilt, und somit der Ausgangspunkt der Punktmultiplikation auf der Kurve $E_2$ eine durch $2^{\{e+1\}}$ teilbare Ordnung hat. In Schritt 5 von Algorithmus 2 wird, wenn das Zwischenergebnis Q ausgehend von $P_2$ berechnet wird, stets ein ungeradzahliges Vielfaches $T[k_j]$ von $P_2$ zu einem geradzahligen Vielfachen Q von $P_2$ hinzugefügt, wobei der Eingabewert Q im vorangehenden Schritt 4 durch Punktverdoppelung entstanden ist. Da $P_2$ gerade Ordnung in $E_2$ hat, kann der fehlerhafte Fall $T[k_j] = \pm Q$ nicht auftreten. Klarerweise ist das Ergebnis Q von Schritt 5 ein ungeradzahliges Vielfaches von $P_2$. Somit ist die Eingabe in Schritt 4 immer ein ungeradzahliges Vielfaches von $P_2$. Da $P_2$ eine durch $2^{(e+1)}$ teilbare Ordnung in $E_2$ hat, wird, wenn in Schritt 4 der Punkt Q mit $2^e$ multipliziert wird, der Punkt im Unendlichen nie erreicht.
Optional kann, um in Schritt 5 Zeit zu sparen, $k_1$ modulo der Ordnung von $P_2$ in E' reduziert werden, bevor $k_1$ $P_2$ berechnet wird.

Zitierter Stand der Technik

[1][Seysen] "Error-free protection of EC point multiplication by modular extension", Martin Seysen, unveröffentlicht
[2][Blömer] "Sign change fault attacks on elliptic curve cryptosystems", J. Blömer, M. Otto, and J.P. Seifert, in: L. Breveglieri, I. Koren, D. Naccache, and J.P. Seifert, editors, Fault Diagnosis and Tolerance in Cryptography, volume 4236 of Lecture Notes in Computer Science, pages 36-52, Springer, 2006

**EP 3 542 262 B1**

[3][Rauzy] "Using Modular Extension to Provably Protect ECC Against Fault Attacks", P. Rauzy, M. Moreau, S. Guilley, and Z. Najm, Cryptology ePrint Archive, Report 2015/882, 2015. http://eprint.iacr.org/

**Patentansprüche**

1. Verfahren zum gegen Fehlerangriffe gesicherten zumindest teilweisen Durchführen einer kryptographischen Berechnung, insbesondere Verschlüsselung, Entschlüsselung, Signaturbildung oder Signaturprüfung, wobei die kryptographische Berechnung eine Verwendung eines Vielfachen $Q = k^*P$ eines Ausgangspunktes P auf einer elliptischen Kurve umfasst, das Verfahren umfassend die Schritte:

   (a) Berechnen des k-fachen Vielfachen $Q = k^*P$ eines Ausgangspunktes P von ungerader Ordnung auf einer elliptischen Kurve E, wobei diese Berechnung, beginnend mit einer Menge von kleinen ungeraden Vielfachen des Ausgangspunktes P, durch eine Folge von Verdoppelungen und von Additionen oder Subtraktionen von Vielfachen von P erfolgt,
   (b) Bereitstellen des berechneten Vielfachen Q zur Verwendung in der kryptographischen Berechnung, **wobei**

      - anstatt das Vielfache $Q = k^*P$ auf der Kurve E direkt zu berechnen: das Vielfache $Q_1 = k^*P_1$ auf einer erweiterten Kurve $E_1$ berechnet wird, wobei $E_1$ eine modulare Erweiterung der Kurve E durch eine kleinere Hilfskurve $E_2$ darstellt, und wobei $P_1$ eine modulare Erweiterung des Ausganspunktes P auf der erweiterten Kurve $E_1$ ist; und: das Ergebnis Q durch modulare Reduktion des berechneten Punktes $Q_1$ von der erweiterten Kurve $E_1$ auf die Kurve E ermittelt wird;
      - zur Überprüfung der Berechnung von $Q_1$: das Vielfache $Q = k^*P$ auf der Hilfskurve $E_2$ berechnet wird, und der auf der erweiterten Kurve $E_1$ berechnete Punkt $Q_1$ auf die Hilfskurve $E_2$ modular reduziert wird, zu $Q^*$; und
      - das Ergebnis Q nur höchstens dann ausgegeben wird, wenn das Ergebnis $Q^*$ der modularen Reduktion des Punktes $Q_1$ von auf der erweiterten Kurve $E_1$ auf die Hilfskurve $E_2$ gleich $Q_2$ ist; wobei
      - die Ordnung des Punktes $P_2$, der durch Reduktion des Punktes $P_1$ modulo der Hilfskurve $E_2$ gegeben ist, durch eine hinreichend hohe Zweierpotenz $2^{(e+1)}$ teilbar ist, so dass bei der Berechnung des Vielfachen $Q_2$ modulo der Hilfskurve $E_2$ niemals der unendlich ferne Punkt von $E_2$ als Zwischenergebnis auftritt.

2. Verfahren nach Anspruch 1, wobei die Kurve E eine Kurve von Primzahlcharakteristik p ist und die Hilfskurve $E_2$ eine Kurve von Primzahlcharakteristik p' ist, und wobei die arithmetischen Operationen auf der Erweiterungskurve $E_1$ modulo p * p' ausgeführt werden.

3. Verfahren nach Anspruch 1, wobei die Kurven E und $E_2$ Kurven über einem endlichen Körper $GF(p^n)$ bzw. $GF(p^m)$ mit $p^n$ bzw. $p^m$ Elementen sind, und wobei die endlichen Körper $GF(p^n)$ bzw. $GF(p^m)$ als Polynomringe $GF(p)[x]/Pn$ bzw. $GF(p)[x]/P_m$ dargestellt werden, für geeignete Polynome Pn und Pm vom Grad n bzw. m, und wobei die arithmetischen Operationen auf der Erweiterungskurve $E_1$ in dem Ring $GF(p)[x]/(P_n^*P_m)$ ausgeführt werden.

4. Verfahren nach Anspruch 3, wobei p=2 gilt.

5. Verfahren nach einem der vorangehenden Ansprüche, wobei die durchlaufene Folge von Punktverdoppelungen auf der einen Seite und von Punkt-additionen oder -subtraktionen auf der anderen Seite unabhängig von dem Multiplikator k ist.

6. Verfahren nach einem der Ansprüche 1 bis 5, wobei der Punkt $P_2$, der durch Reduktion des Punktes $P_1$ modulo der Hilfskurve $E_2$ gegeben ist, fest gewählt wird.

7. Verfahren nach einem der Ansprüche 1 bis 5, wobei als der Punkt $P_2$, der durch Reduktion des Punktes $P_1$ modulo der Hilfskurve $E_2$ gegeben ist, ein zufällig gewähltes ungerades Vielfaches eines fest gewählten Punktes auf der Hilfskurve $E_2$ verwendet wird.

8. Verfahren nach einem der vorangehenden Ansprüche, wobei die Ordnung q des Ausgangspunktes P eine Primzahl ist.

9. Verfahren nach einem der vorangehenden Ansprüche, wobei vor Beginn der Berechnung zu dem Multiplikator k ein kleines Vielfaches der l*q Gruppenordnung q addiert wird, so dass k'= k+l*q ungerade ist, und dass bei der

7

Punktmultiplikation der Multiplikator k' anstelle von k verwendet wird.

10. Verfahren nach Anspruch 9, wobei der ungerade Multiplikator k' in der Form k' = $\sum_{j=0}^{i-1} (2^{ej} k_j)$ dargestellt wird, so dass alle $k_j$ ungerade und dem Betrag nach kleiner als $2^e$ sind, und dass $Q_1 = k' * P_1$ wie folgt berechnet wird:

$$Q_1^{\{(i-1)\}} = k_{\{i-1\}} P_1,$$

$$Q_1^{\{(j-1)\}} = 2^e * Q_1^{\{(j)\}} + k_{\{j-1\}} P_1, \text{ für } j = i-1,...,1,$$

$$Q_1 = Q1^{\{(0)\}}.$$

11. Verfahren nach einem der einem der vorangehenden Ansprüche, wobei der Punkt $P_2$, der durch Reduktion des Punktes $P_1$ modulo der Hilfskurve $E_2$ gegeben ist, die Ordnung $2^{\{e+1\}}*q$ hat, und wobei jedes Zwischenergebnis bei der Berechnung von $Q_1$ modulo der Hilfskurve $E_2$ ein x-faches Vielfache von $P_1$ ist, so dass x höchstens durch $2^e$, aber nicht durch $2^{\{e+1\}}$ teilbar ist.

12. Verfahren nach Anspruch 11, wobei q ungerade ist, und wobei keine Beziehung $2^l * b = +-a$ modulo q gilt, für ungerade a, b mit $0 < a, b < 2^e$, und wobei $l > 0$ und ungefähr gleich der Bitlänge der größten von dem Verfahren unterstützten Kurve E ist.

13. Verfahren nach einem der Ansprüche 1 bis 12 in Verbindung mit Anspruch 8, wobei durch das Merkmal, dass die Ordnung des Ausgangspunktes P eine Primzahl ist, bei Verwendung des Multiplikators k' erreicht wird, dass niemals der unendlich ferne Punkt auf der Kurve E als Zwischenergebnis auftritt.

14. Verfahren nach einem der vorangehenden Ansprüche, wobei die Kurven E und $E_2$ in Weierstraß-Form dargestellt sind.

15. Verfahren nach einem der vorangehenden Ansprüche, wobei die Berechnung der Punktmultiplikation in affinen, projektiven, oder projektiven Jacobi-Koordinaten erfolgt.

16. Verfahren nach einem der vorangehenden Ansprüche, wobei als kryptographischen Berechnung ein Elliptische Kurven Diffie Hellman Verfahren, oder ein vergleichbares Verfahren basierend auf Elliptische Kurve Kryptographie, zur kombinierten Authentisierung und Schlüsselableitung zwischen zwei Parteien, um einen gesicherten Kommunikationskanal zwischen den Parteien einzurichten, vorgesehen ist.

**Claims**

1. A method for at least partially performing a cryptographic computation secured against error attacks, in particular encryption, decryption, signature generation or signature verification, wherein the cryptographic computation comprises an employment of a multiple $Q = k*P$ of a starting point P on an elliptic curve, the method comprising the steps of:

   a) Computing the k-fold multiple $Q = k*P$ of a starting point P of odd order on an elliptical curve E, wherein this computation, beginning with a set of small odd multiples of the starting point P, is effected through a sequence of duplications and of additions or subtractions of multiples of P,
   b) supplying the computed multiple Q for employment in the cryptographic computation, **wherein**

      - instead of computing the multiple $Q = k*P$ on the curve E directly: the multiple $Q_1 = k*P_1$ on an extended curve $E_1$ is computed, wherein $E_1$ represents a modular extension of the curve E by a smaller auxiliary curve $E_2$, and wherein $P_1$ is a modular extension of the starting point P on the extended curve $E_1$; and: the result Q is established by modular reduction of the computed point $Q_1$ of the extended curve $E_1$ on the curve E;
      - for checking the computation of $Q_1$: the multiple $Q_2 = k*P_2$ on the auxiliary curve $E_2$ is computed, and the point $Q_1$ computed on the extended curve $E_1$ is modularly reduced to the auxiliary curve $E_2$, to Q*; and
      - the result Q is only output at most if the result Q* of the modular reduction of point $Q_1$ of on the extended

curve $E_1$ to the auxiliary curve E2 is equal to $Q_2$; wherein
- the order of the point $P_2$, which is given by reduction of the point $P_1$ modulo of the auxiliary curve $E_2$, is divisible by a sufficiently high power of two $2^{(e+1)}$, so that upon the computation of the multiple $Q_2$ modulo of the auxiliary curve $E_2$, the infinitely distant point of $E_2$ never occurs as an intermediate result.

2. The method according to claim 1, wherein the curve E is a curve of prime number characteristic p and the auxiliary curve $E_2$ is a curve of prime number characteristic p', and wherein the arithmetic operations are executed on the extension curve $E_1$ modulo p * p'.

3. The method according to claim 1, wherein the curves E and $E_2$ are curves over a finite body $GF(p^n)$ respectively $GF(p^m)$, having $p^n$ respectively $p^m$ elements, and wherein the finite bodies $GF(p^n)$ respectively $GF(p^m)$ are represented as polynomial rings $GF(p)[x]/P_n$ respectively GF(p)[x]/Pm, for suitable polynomials Pn and $P_m$ of degree n respectively m, and wherein the arithmetic operations on the extension curve $E_1$ are executed in the ring GF(p) [x] / $(P_n {}^*P_m)$.

4. The method according to claim 3, wherein there holds p=2.

5. The method according to any of the preceding claims, wherein the traversed sequence of point duplications on one side and of point additions or point subtractions on the other side is independent of the multiplier k.

6. The method according to any of claims 1 to 5, wherein the point $P_2$, which is given by reduction of the point $P_1$ modulo of the auxiliary curve $E_2$, is fixedly selected.

7. The method according to any of claims 1 to 5, wherein as the point $P_2$, which is given by reduction of the point $P_1$ modulo of the auxiliary curve $E_2$, a randomly chosen odd multiple of a fixedly selected point on the auxiliary curve $E_2$ is employed.

8. The method according to any of the preceding claims, wherein the order q of the starting point P is a prime number.

9. The method according to any of the preceding claims, wherein before beginning the computation a small multiple of the l*q group order q is added to the multiplier k, so that k' = k+l*q is odd, and that upon the point multiplication the multiplier k' is employed in place of k.

10. The method according to claim 9, wherein the odd multiplier k' is represented in the form k' = \sum_{(j=0)}^{\{i-1\}} $(2^{\{ej\}}$ kj), so that all $k_j$ are odd and amount to less than $2^e$, and that $Q_1$ = k' * $P_1$ is computed as follows:

$$Q_1^{\{(i-1)\}} = k_{\{i-1\}} P_1,$$

$$Q_1^{\{(j-1)\}} = 2^e * Q_1^{\{(j)\}} + k_{\{j-1\}} P_1, \text{ for } j = i-1,...,1,$$

$$Q_1 = Q1^{\{(0)\}}.$$

11. The method according to one of the preceding claims, wherein the point $P_2$, which is given by reduction of the point $P_1$ modulo of the auxiliary curve $E_2$, has the order $2^{\{e+1\}}*q$, and wherein each intermediate result upon the computation of $Q_1$ modulo of the auxiliary curve $E_2$ is an x-fold multiple of $P_1$, so that x is divisible at most by $2^e$, but not by $2^{\{e+1\}}$.

12. The method according to claim 11, wherein q is odd, and wherein there holds no relation $2^l * b = +-a$ modulo q, for odd a, b with $0 < a, b < 2^e$, and wherein 1 > 0 and is approximately equal to the bit length of the greatest curve E supported by the method.

13. The method according to any of claims 1 to 12 in connection with claim 8, wherein by the feature that the order of the starting point P is a prime number, upon employment of the multiplier k' it is attained that the infinitely distant point on the curve E never occurs as an intermediate result.

14. The method according to any of the preceding claims, wherein the curves E and $E_2$ are represented in Weierstrass form.

15. The method according to any of the preceding claims, wherein the computation of the point multiplication is effected in affine, projective, or projective Jacobi coordinates.

16. The method according to any of the preceding claims, wherein there is provided as the cryptographic computation an elliptic-curve Diffie Hellman method, or a comparable method based on elliptic-curve cryptography, for the combined authentication and key derivation between two parties in order to devise a secure communication channel between the parties.

**Revendications**

1. Procédé d'exécution au moins partielle, sécurisée contre les attaques par faute, d'un calcul cryptographique, en particulier chiffrement, déchiffrement, constitution de signature ou examen de signature, cependant que le calcul cryptographique comprend une utilisation d'un multiple Q = k*P d'un point de départ P sur une courbe elliptique, le procédé comprenant les étapes :

   (a) calcul à facteur k du multiple Q = k*P d'un point de départ P d'ordre impair sur une courbe elliptique E, cependant que ce calcul, en commençant par une quantité de petits multiples impairs du point de départ P, a lieu par une suite de duplications et d'additions ou de soustractions de multiples de P,
   (b) mise à disposition du multiple calculé Q pour l'utilisation dans le calcul cryptographique, **cependant que**

   - au lieu de calculer directement le multiple Q = k*P sur la courbe E : le multiple $Q_1$ = $k*P_1$ est calculé sur une courbe élargie $E_1$, cependant que $E_1$ représente une extension modulaire de la courbe E par une courbe auxiliaire $E_2$ plus petite, et cependant que $P_1$ est une extension modulaire du point de départ P sur la courbe élargie $E_1$; et : le résultat Q est déterminé par réduction modulaire du point $Q_1$ calculé de la courbe élargie $E_1$ à la courbe E;
   - pour la vérification du calcul de $Q_1$ : le multiple $Q_2$ = $k*P_2$ est calculé sur la courbe auxiliaire $E_2$, et le point $Q_1$ calculé sur la courbe élargie $E_1$ est réduit de façon modulaire sur la courbe auxiliaire $E_2$, de manière à obtenir Q* ; et le résultat Q n'est fourni en sortie qu'au plus dans le cas où le résultat Q* de la réduction modulaire du point $Q_1$ de la courbe élargie $E_1$ à la courbe auxiliaire $E_2$ est égal à $Q_2$; cependant que
   - l'ordre du point $P_2$ obtenu par réduction du point $P_1$ modulo la courbe auxiliaire $E_2$ est divisible par une puissance de deux suffisamment haute $2^{(e+1)}$, de telle sorte que, lors du calcul du multiple $Q_2$ modulo la courbe auxiliaire $E_2$, jamais le point à l'infini de $E_2$ n'apparaît comme résultat intermédiaire.

2. Procédé selon la revendication 1, cependant que la courbe E est une courbe de caractéristique de nombres premiers p, et que la courbe auxiliaire $E_2$ est une courbe de caractéristique de nombres premiers p', et cependant que les opération arithmétiques sont effectuées sur la courbe élargie $E_1$ modulo p * p'.

3. Procédé selon la revendication 1, cependant que les courbes E et $E_2$ sont des courbes au-dessus d'un corps fini $GF(p^n)$ ou $GF(p^m)$ avec éléments $p^n$ ou $p^m$, et cependant que les corps finis $GF(p^n)$ ou $GF(p^m)$ sont représentés sous forme d'anneaux polynomiaux $GF(p)[x]/P_n$ ou $GF(p)[x]/Pm$, pour des polynômes adaptés Pn et Pm du degré n ou m, et cependant que les opération arithmétiques sont effectuées sur la courbe élargie $E_1$ dans l'anneau $GF(p)[x]/(P_n*/P_m)$.

4. Procédé selon la revendication 3, cependant qu'il est établi que p=2.

5. Procédé selon une des revendications précédentes, cependant que la suite effectuée de duplications de points d'un côté, et d'additions ou de soustractions de points de l'autre côté est indépendante du multiplicateur.

6. Procédé selon une des revendications de 1 à 5, cependant que le point $P_2$ obtenu par réduction du point $P_1$ modulo la courbe auxiliaire $E_2$ est sélectionné de façon fixe.

**7.** Procédé selon une des revendications de 1 à 5, cependant que, en tant que le point $P_2$ obtenu par réduction du point $P_1$ modulo la courbe auxiliaire $E_2$, un multiple impair sélectionné aléatoirement d'un point sélectionné de façon fixe sur la courbe auxiliaire $E_2$ est utilisé.

**8.** Procédé selon une des revendications précédentes, cependant que l'ordre q du point de départ P est un nombre premier.

**9.** Procédé selon une des revendications précédentes, cependant que, avant le commencement du calcul, il est additionné au multiplicateur k un petit multiple de l'ordre l*q de groupe q de telle sorte que k'= k+ l*q est impair, et que, lors de la multiplication de points, le multiplicateur k' est utilisé au lieu de k.

**10.** Procédé selon la revendication 9, cependant que le multiplicateur impair k' est représenté sous la forme k'= \sum_{j=0}^{i-1} (2^{ej} k_j), de telle sorte que tous les kj sont impairs et ont un montant inférieur à $2^e$, et que $Q_1 = k' * P_1$ est calculé comme ce qui suit :

$$Q_1^{(i-1)} = k_{i-1}\, P_1,$$

$$Q_1^{(i-1)} = 2^e * Q_1^{(j)} + k_{j-1}\, P_1, \text{ pour } j = i-1, \ldots, 1,$$

$$Q_1 = Q1^{(0)}.$$

**11.** Procédé selon une des revendications précédentes, cependant que le point $P_2$ obtenu par réduction du point $P_1$ modulo la courbe auxiliaire $E_2$ a l'ordre $2^{e+1}*q$, et cependant que chaque résultat intermédiaire lors du calcul de $Q_1$ modulo la courbe auxiliaire $E_2$ est un multiple à facteur x de $P_1$, de telle sorte que x est au plus divisible par $2^e$, mais pas par $2^{e+1}$.

**12.** Procédé selon la revendication 11, cependant que q est impair, et cependant qu'aucune relation $2^1 * b = + -a$ modulo q n'est valable, pour a, b impairs avec $0 < a, b < 2^e$, et cependant que 1 > 0 est approximativement égal à la longueur de bits de la courbe E la plus grande supportée par le procédé.

**13.** Procédé selon une des revendications de 1 à 12 en corrélation avec la revendication 8, cependant que, par la caractéristique que l'ordre du point de départ P est un nombre premier, en utilisant le multiplicateur k', il est obtenu que jamais le point à l'infini sur la courbe E n'apparaît comme résultat intermédiaire.

**14.** Procédé selon une des revendications précédentes, cependant que les courbes E et $E_2$ sont représentées sous forme Weierstrass.

**15.** Procédé selon une des revendications précédentes, cependant que le calcul de la multiplication de points a lieu en coordonnées affines, projectives, ou projectives de Jacobi.

**16.** Procédé selon une des revendications précédentes, cependant que, comme calcul cryptographique, un procédé de Courbes Elliptiques Diffie Hellman ou un procédé comparable basé sur Cryptographie Courbes Elliptiques pour l'authentification combinée et dérivation de clé entre deux parties afin d'établir un canal de communication sécurisé entre les parties est prévu.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARTIN SEYSEN.** *Error-free protection of EC point multiplication by modular extension*
- Sign change fault attacks on elliptic curve cryptosystems. **J. BLÖMER ; M. OTTO ; J.P. SEIFERT.** Fault Diagnosis and Tolerance in Cryptography. Lecture Notes in Computer Science, 2006, vol. 4236, 36-52

- **P. RAUZY ; M. MOREAU ; S. GUILLEY ; Z. NAJM.** Using Modular Extension to Provably Protect ECC Against Fault Attacks. *Cryptology ePrint Archive, Report 2015/882,* 2015, http://eprint.iacr.org